# EUROPÄISCHE PATENTSCHRIFT

(11) **EP 3 360 844 B1**
(45) Veröffentlichungstag und Bekanntmachung des Hinweises auf die Patenterteilung: **16.10.2019**
(21) Anmeldenummer: 18020053.7
(22) Anmeldetag: 08.02.2018
(51) Int. Cl.: B67D 1/12, B67D 1/00, B67D 1/14, B67D 1/04

(54) **ZAPFHAHNTÜLLE ZUR ZERKLEINERUNG VON GASBLASEN NITROGENISIERTEN KAFFEES ODER BIERS UND SCHANKANLAGE**
DISPENSING EQUIPMENT, TAP FOR SAME, AND METHOD FOR PRODUCING NITROGENISED COFFEE OR BEER
INSTALLATION DE DÉBIT, ROBINET CORRESPONDANT AINSI QUE PROCÉDÉ DE PRODUCTION DE CAFÉ OU DE BIÈRE AZOTÉS

(30) Priorität: 08.02.2017 DE 102017001151; 23.10.2017 DE 202017005461 U
(43) Veröffentlichungstag der Anmeldung: 15.08.2018
(73) Patentinhaber: Carbotek Systems GmbH, 86720 Nördlingen (DE)
(72) Erfinder: Koch, Florian, 86720 Nördlingen (DE)
(74) Vertreter: Munk, Ludwig

(56) Entgegenhaltungen:
- AU-A1- 2008 240 331
- DE-A1-102008 035 636
- GB-A- 1 522 295
- GB-A- 2 524 841

## Beschreibung

Die Erfindung betrifft eine Zapfhahnauslauftülle gemäß dem Oberbegriff des Anspruchs 1, sowie eine damit ausgestattete Schankanlage gemäß dem Oberbegriff des Anspruchs 9 und ein Verfahren zur Herstellung nitrogenisierten Kaffees oder Biers unter Verwendung einer solchen Schankanlage gemäß dem Oberbegriff des Anspruchs 15.

Bekannt sind sogenannte Inline-Carbonisierungsverfahren, bei denen Getränkevorprodukte, wie beispielsweise ein kohlensäureloses Biervorprodukt oder ein Limonadensirup mit CO₂ imprägniert werden. Dabei wird das CO₂ mittels eines sogenannten Imprägnierers oder Carbonators in die Flüssigkeit eingebunden. Imprägnierer für die Inline-Carbonisierung sind beispielsweise aus der internationalen Patentanmeldung WO 2007/112892 A2 (Imprägnierer mit einem porenaufweisenden Festkörper), den deutschen Patentanmeldungen DE 101 60397 A1 und DE 10 2004 021 823 A1 (Schüttgutcarbonator), sowie der deutschen Patentanmeldung DE 199 851 360 A1 (Rohrsiebcarbonator), der US-Patentschrift US 6,,712,742 B2 (Hohlfasermembran als Imprägnierkörper im Carbonator und die deutsche Patentschrift DE 103 40 024 B3 (Lochplatten-Carbonator) bekannt.

Die Inline-Carbonisierung hat sich besonders deshalb als vorteilhaft erwiesen, weil anstatt Druckbehältern (Fässer, beispielsweise Kegs), welche bisher nötig waren, um die Getränke so unter Druck zu halten, dass sich die gelöste Kohlensäure (genauer: CO₂) nicht wieder entbindet, drucklose Getränkebehälter verwendet werden können, weil die Kohlensäure erst in der Schankanlage zugesetzt wird.

Aus der deutschen Patentanmeldung DE 10 2008 012 486 A1 ist ferner eine Schankanlage bekannt, bei der die Einmischung des CO₂ in die Schankleitung beabstandet von einem Binderohr erfolgt, in dem das CO₂ in das Getränkevorprodukt eingebunden wird bzw. in dem das Getränkevorprodukt mit dem CO₂ imprägniert wird. Dies hat den Vorteil, dass sich das Binderohr leichter ausbauen und reinigen lässt als ein voll integrierter Imprägnierer, der sowohl an eine Getränkevorproduktzuleitung, als auch an eine Gaszuleitung und an die Gemischableitung angeschlossen ist.

Weiterhin bekannt ist es, Getränken wie z.B. Bier oder Kaffee Stickstoff einzumischen, um so eine stabile Schaumkrone und ein spezielles, cremiges Mundgefühl beim Trinken des Getränks zu erhalten. Genannt seien hier beispielsweise Stout-Biere, wie sie die Guinness-Brauerei herstellt oder auch kalter Kaffee, der mittels zugemischtem Stickstoff mit einer ähnlichen Schaumkrone versehen wird. Zum Nitrogenisieren von Getränken werden dabei neben anderen Möglichkeiten Mischzellen in der Schankleitung verwendet, die den vorstehend genannten Inline-Carbonisierern ähneln, wie beispielsweise die europäische Patentanmeldung EP 01 94787 A1 der Fa. Guinness zeigt.

Dabei muss das inline zugesetzte Gas aber lediglich in das Getränkevorprodukt eingemischt werden, ohne das dabei eine Bindung bzw. ein Lösen in der Flüssigkeit, wie bei der Carbonisierung, erforderlich wäre. Die Anforderungen an die in der Mischzelle herrschenden Randbedingungen - z.B. Druck, Druckgefälle vom Gas zum Getränkevorprodukt, Temperatur, zur Verfügung stehende Oberfläche - sind daher wesentlich einfacher zu erfüllen als bei einem Imprägnierer für die Inline-Carbonisierung. Ferner ist bei einer Schankanlage für Stout-Biere und dergleichen am Zapfhahn für gewöhnlich eine Auslasstülle vorgesehen, die eine Strömungslaminarisierungsanordnung aufweist, an der die Auslaufströmung gebremst und laminarisiert wird.

Als Strömungslaminarisierungsanordnung in der Zapfhahnauslauftülle sind dabei vorwiegend Lochplatten, sogenannte Creamer Plates, im Einsatz. Über den Querschnitt der Bohrungen in der Lochplatte, der gegenüber dem inneren Querschnitt des Zapfhahns klein ist, wird dabei die Fließgeschwindigkeit festgelegt und im Getränk gebundenes Gas durch das Sprühen bzw. Ausdüsen durch die Bohrungen zum Entbinden angeregt. Um zu verhindern, dass das Getränk aus dem Zapfhahn bzw. der Auslauftülle spritzt ist dabei der Lochplatte üblicherweise eine Prallplatte strömungsmäßig nachgeordnet, auf die das durch die Bohrungen gesprühte Getränk trifft.

Die britische Patentanmeldung GB 252484 A1 zeigt eine Schankanlage, bei der zur Strömungslaminarisierung am Zapfhahn eine Auslauftülle aufgesetzt ist, die ein Rohrbündel enthält, durch das die zu zapfende Flüssigkeit geleitet wird, wodurch sich die Strömung beruhigen soll.

Die britische Patentanmeldung GB 1 522 295 A zeigt eine Schankanlage mit einem dem Zapfhahn vorgelagerten Bereich der Schankleitung, in dem ein Innenrohr und diverse Strömungshindernisse angeordnet sind, wobei je nach Stellung des Zapfhahns ein Strömungsweg mit vielen oder wenigen Strömungshindernissen freigegeben werden kann, um entweder ein Bier mit einer großen Schaumkrone oder ohne eine solche zu zapfen.

Hiervon ausgehend liegt der vorliegenden Erfindung die Aufgabe zugrunde, bei einer zum Inline-Einmischen eines Gases in ein Getränkevorprodukt geeigneten Schankanlage die Durchmischung zu verbessern und einen wartungsfreundlichen und leicht sauber zu haltenden Aufbau zu ermöglichen, sowie ein entsprechend mit guter Durchmischung wartungsfreundlich und hygienisch umzusetzendes Verfahren zum Nitrogenisieren von Bier oder Kaffee zu schaffen.

Diese Aufgabe wird mit einer Zapfhahnauslauftülle mit den Merkmalen des Anspruchs 1 gelöst, hinsichtlich der gesamten Schankanlage mit den Merkmalen des Anspruchs 9 und hinsichtlich des Verfahrens mit den Merkmalen des Anspruchs 15.

Erfindungsgemäß wird eine Zapfhahnauslauftülle für einen Zapfhahn einer Schankanlage vorgeschlagen, die zum Durchmischen eines aus einem Getränkevorprodukt wie Kaffee oder Bier und einem Gas wie CO₂, N₂, oder Druckluft bestehenden Volumenstrom geeignet ist und einen vorzugsweise zylindrischen Durchlaufrohrabschnitt sowie einen sich auslaufseitig daran anschließenden, sich verjüngenden Auslaufrohrabschnitt aufweist, wobei zwischen der Einlaufseite des Durchlaufrohrabschnitts und dem Auslaufrohrabschnitt eine Mischanordnung in der Zapfhahnauslauftülle aufgenommen ist, welche dafür geeignet ist, von dem Gemisch aus dem Getränkevorprodukt und den darin enthaltenen Gasblasen durchströmt zu werden und dabei die Gasblasen zu zerkleinern.

Durch die Anordnung der Mischanordnung zum Einmischen des Gases, in der Regel Stickstoff in der Form von N₂ oder als Druckluft, welche 78 % N₂ enthält, oder auch CO₂, am äußersten Ende der Schankleitung, nämlich am Auslauf des Zapfhahns, in einem eigenen Bauteil, nämlich der Zapfhahnauslauftülle, gelingt ein besonders einfaches Ausbauen der Mischanordnung mitsamt der Zapfhahnauslauftülle, so dass diese leicht zu reinigen und zu warten ist. Auch ein Austausch kann auf einfache Weise erfolgen.

Damit wird ein im Getränkebereich wünschenswerter hygienischer Standard erreicht, ohne dass es im Betriebsablauf einer Kneipe oder dergleichen zu nennenswerten Ausfallzeiten der Schankanlage kommt. Zudem ermöglicht die erfindungsgemäße Zapfhahnauslauftülle eine einfache Nachrüstung einer herkömmlichen, bisher ohne Inline-Begasung arbeitenden Schankanlage für den Ausschank eines nitrogenisierten Getränks mittels Austausch der vorhandenen Zapfhahnauslauftülle durch die erfindungsgemäße Zapfhahnauslauftülle, und Nachrüsten eines Gasanschlusses an der Schankleitung zum Einleiten des Gases aus einer Gasquelle, z.B. einer Druckgasflasche, in die Schankleitung.

Die erfindungsgemäße Schankanlage für Gasblasen enthaltende Getränke wie beispielsweise nitrogenisierten Kaffee oder nitrogenisiertes Bier weist dementsprechend neben einer Schankleitung, die von einer Getränkevorproduktquelle wie einem KEG-Fass oder einem Bag-in-Box-Behälter zu einem Zapfhahn führt, einer an die Schankleitung angeschlossenen Druckgasquelle, wie beispielsweise einer mit N₂ oder CO₂ gefüllten Druckgasflasche oder einem Druckluftkompressor, und einer Fördereinrichtung, um einen Volumenstrom durch die Schankleitung zum Zapfhahn zu fördern, einen mit einem vorstehend genannten Zapfhahnauslauftülle versehenen Zapfhahn auf.

Die erfindungsgemäße Schankanlage ist also so konfiguriert, dass die Durchmischung des Gasblasen-Getränkevorprodukt-Volumenstroms auf seine endgültige Konsistenz mit zerkleinerten Gasblasen beabstandet von der zulaufseitigen Einmischung des Gases in das Getränkevorprodukt am äußersten Ende der Schankleitung, nämlich an der Zapfhahnauslauftülle erfolgt.

Insgesamt ist die erfindungsgemäße Schankanlage zur Herstellung von Gasblasen enthaltenden Getränken wie beispielsweise nitrogenisiertem Kaffee oder nitrogenisiertem Bier aus einem Druckgas, wie beispielsweise N₂ oder CO₂, und einem Getränkevorprodukt, das das einzumischenden Druckgas noch nicht enthält, geeignet. Das Getränkevorprodukt kann dabei insgesamt gaslos oder gasarm sein. Es wäre jedoch auch denkbar, ein kohlensäurehaltiges Getränkevorprodukt mittels der erfindungsgemäßen Schankanlage zu nitrogenisieren.

Bag-in-Box-Behälter sind drucklose Getränkebehälter, welche meist aus einem flüssigkeitsdichten Getränkesack in einem Formgebungskarton bestehen, wobei der Getränkesack über ein Ventil oder über dergleichen an einen Saugleitungsabschnitt einer Schankleitung anzuschließen ist. Bag-in-Box-Behälter eignen sich somit nicht zur Lagerung von kohlensäurehaltigen Getränken, die unter Druck gelagert werden müssen, beispielsweise in einem KEG-Fass.

Ist das Getränkevorprodukt in einem Bag-in-Box-Behälter enthalten, so eignet sich als Fördereinrichtung eine als Saugpumpe konfigurierte Förderpumpe, die das Getränkevorprodukt aus dem Bag-in-Box-Behälter in die Schankleitung saugt. Ist die Getränkevorproduktquelle dagegen ein Druckfass (z.B. KEG), so eignet sich als Fördereinrichtung auch eine als Druckpumpe konfigurierte Förderpumpe, die das Fass unabhängig vom Füllzustand unter einen Überdruck von z.B. 0,5 bar setzt, um das das Getränkevorprodukt in die Schankleitung zu drücken und möglicherweise gleichzeitig ein Ausgasen des im Getränkevorprodukt enthaltenen CO₂ zu verhindern. Zusätzlich kann auch hier eine weitere Förderpumpe in der Schankleitung vorgesehen sein.

Wird ein Druckluftkompressor als Gasquelle für das in das Getränkevorprodukt einzumischende Gas eingesetzt kann beispielsweise vorgesehen sein, dass der der Druckluftkompressor die einzumischende Druckluft mit 2,5 bar Überdruck liefert. Druckgasflaschen bzw. -behälter können aber auch Druckluft, N₂ oder auch CO₂ mit höheren Drücken liefern, sind aber an entsprechenden Stelleinrichtungen ebenfalls auf einen bevorzugten Druck von 2,5 bar einstellbar. Vorteilhaft ist die als Fördereinrichtung dienende Förderpumpe dabei pneumatisch angetrieben, so dass die Druckgasquelle auch das zum Antrieb der Förderpumpe nötige Druckgas bereitstellen kann. Die Druckgasquelle kann ferner den Überdruck liefern, mit dem ein Druckfass zu beaufschlagen ist.

Weiterhin erfindungsgemäß wird bei einem Verfahren zur Herstellung nitrogenisierten Kaffees oder Biers der Kaffee oder das Bier in einer solchen, vorstehend erläuterten Schankanlage nitrogenisiert. Dabei ergibt sich ein Getränk wie z.B. Bier oder Kaffee mit einer stabilen und cremigen Schaumkrone, die ihresgleichen sucht. Es wäre aber auch denkbar, mit der erfindungsgemäßen Schankanlage bispielsweise Milch aufzuschäumen.

Vorteilhaft weist die Mischanordnung dabei zumindest eine, weiterhin bevorzugt eine Mehrzahl parallel und/oder in Serie zu durchströmender Venturidüsen auf.

Dabei macht man sich für die Durchmischung des Volumenstroms bzw. zur Zerkleinerung der in dem Getränkevorprodukt enthaltenen Gasblasen das Prinzip einer Strahlpumpe zu Nutze. Eine Strahlpumpe ist eine Pumpe, in der die Pumpwirkung durch einen Fluidstrahl, das Treibmedium, erzeugt wird, der durch Impulsaustausch ein anderes Medium, das Saugmedium, ansaugt. Die Strahlpumpe weist dabei eine Treibleitung auf, in der eine Treibdüse bzw. Engstelle angeordnet ist. An bzw. nach der Engstelle mündet eine Saugleitung in die Treibleitung. In der Treibdüse wird das Treibmedium beschleunigt und verliert daher an Druck. Es entsteht somit ein Unterdruck und damit ein Sog auf das in der Saugleitung befindliche Saugmedium, so dass das Saugmedium beschleunigt und mitgerissen wird. Dabei entstehen durch Reibung Verwirbelungen bzw. Turbulenzen, welche eine Vermischung der Medien bewirken.

Die in der Zapfhahnauslauftülle angeordnete, zumindest eine Venturi-Düse bzw. Strahlpumpe weist dabei einen zur Schankleitung gewandten Einlass auf, also den Treibleitungseinlass. Die zumindest eine Venturi-Düse bzw. Strahlpumpe weist dabei ferner einen zum Zapfhahnauslauf gewandten Auslass auf, also den Pumpenauslass. erstreckende Treibleitung und zumindest eine von einem Saugleitungseinlass in die Treibleitung führende Saugleitung umfasst, wobei die Strahlpumpe so angeordnet ist, dass zumindest das Getränkevorprodukt am Treibleitungseinlass in die Strahlpumpe strömt und - in zumindest teilweise im Getränk gebundener Form - am Pumpenauslass aus ihr heraus. Es wird also das flüssige Getränkevorprodukt alleine oder zusammen mit dem Imprägniergas der Treibleitung zugeführt und somit als Treibmedium eingesetzt.

Dadurch wird ein starker Sog auf das auf der Saugseite der Pumpe befindliche Saugmedium ausgeübt. Bevorzugt ist dabei der Pumpenauslass mit dem Saugleitungseinlass verbunden. Es kommt dann zu einer Rückkopplung derart, dass ein Teil des aus dem Pumpenauslass kommenden Volumenstroms, bestehend aus einem Gemisch aus Gas und Getränkevorprodukt, zur Saugleitung hin strömt und als Saugmedium erneut von dem neu in die Strahlpumpe eintretenden Volumenstrom angesogen wird. Es hat sich herausgestellt, dass auf diese Weise eine besonders gute Durchmischung bzw. Gasblasenzerkleinerung erreicht werden kann.

Die Venturi-Düse bzw. Strahlpumpe der Mischanordnung ist also vorteilhaft so in die Zapfhahnauslauftülle eingebaut, dass als Saugmedium ein vom Pumpenauslass rückströmender Volumenstrom, bestehend aus dem Getränke-Gasblasen-Gemisch anliegt. Beim Mitreißen des Saugmediums mit dem Treibmedium kommt es zu einem hohen Turbulenzgrad und in der Folge zu einer wirkungsvollen Durchmischung von Getränkevorprodukt und Gas unter starker Verkleinerung der im Getränkevorprodukt enthaltenen Gasblasen. Zudem ist der Aufbau der Zapfhahnauslauftülle mit zwischengeordneter Venturidüse bzw. Strahlpumpe in hygienischer Hinsicht völlig unbedenklich, da die Strahlpumpe keine bewegten Teile aufweist, welche mitgespült werden könnten und keine feinporige Strukturen, welche möglicherweise nicht genügend durchspült werden, um einen Bakterienbefall langfristig zu verhindern. Vielmehr können alle Oberflächen in der Pumpe glatt sein und sind einer starken Strömung ausgesetzt.

Alternativ oder ergänzend dazu kann die Mischanordnung auch eine Mehrzahl von zu durchströmenden Siebgittern oder Lochplatten aufweisen. Weiterhin bevorzugt ist es dabei, wenn die Siebgitter oder Lochplatten sich in Strömungsrichtung verjüngenden und dann insbesondere erweiternde Durchtrittsöffnungen haben.

Als besonders kostengünstige, platzsparende und in der Montage einfache Variante der Strahlpumpe hat sich dabei der Einsatz eines Strahlreglers bzw. Strahlreglereinsatzes herausgestellt, wie er zum Belüften eines Wasserstrahls an einem Wasserhahn eingesetzt wird. Wasserhahn-Strahlregler werden auf den Auslauf von Wasserhähnen im Haushalt aufgesetzt, um einen weißen, turbulenten Wasser(luftgemisch)strahl zu bilden und dadurch einerseits Wasser zu sparen und andererseits den austretenden Wasser(luftgemisch)strahl weicher und weniger spritzend zu machen. Geeignete Wasserhahn-Strahlregler werden beispielsweise unter der Marke Perlator als Massenware vertrieben und können somit als kostengünstig erhältliches, vorgefertigtes Bauteil in die Zapfhahnauslauftülle eingebaut werden, wodurch sich Montageaufwand und Herstellungskosten begrenzen lassen.

Solche Wasserhahn-Strahlregler haben wie andere bevorzugte Weiterbildungen der erfindungsgemäß eingebauten Strahlpumpe eine Mischkammer, welche einlassseitig von einer (oder mehreren in Reihe geschalteten) Treibdüsenplatten bzw. einem Siebgitter begrenzt wird und umfangsseitig von einer vorzugsweise kreiszylindrischen Wand, welche von vorzugsweise über ihren Umfang verteilten Einlassschlitzen durchbrochen wird, die dann als in die Mischkammer und damit die Treibleitung führende Saugleitungen dienen. Ferner wird die Mischkammer auslassseitig vorteilhaft von zumindest einem Diffusordüsensieb bzw. einem Siebgitter begrenzt, insbesondere in Form eines zwecks Vermeidung von Verkalkungen vorzugsweise aus Kunststoff bestehenden Siebs mit konzentrischen und radialen Stegen.

Wasserhahn-Strahlregler werden in unterschiedlichen Durchflussklassen und mit unterschiedlichem Treibdüsendurchmesser und unterschiedlicher Treibdüsenanzahl angeboten, so dass durch Auswahl eines geeigneten Strahlreglers die Zapfhahnauslauftülle an die Parameter des Getränkevorprodukts und das einzumischenden Gases sowie des gewünschten Getränks angepasst werden kann.

An der Treibdüsenplatte können eine Vielzahl als Bohrungen bzw. Durchtrittsöffnungen ausgebildeter Treibdüsen vorgesehen sein, die somit anstatt eines einzelnen Treibstrahls eine Vielzahl laminarer Treibstrahle liefern. Diese Einzeltreibstrahle strömen in die Mischzelle und bewirken dort aufgrund der gegenüber einem Gesamtstrahl größeren Grenzfläche zum Saugmedium stärkere Reibung am Saugmedium, damit einen höheren Turbulenzgrad und somit letztlich eine bessere Durchmischung des Gases mit dem Getränkevorprodukt bei kleinerer Gasblasengröße. Die einzelnen Düsenöffnungen am Diffursordüsensieb bewirken eine weitere Aufteilung und Durchmischung der Strömung. Die Treibdüsenplatte kann ebenso wie das Diffusordüsensieb und der Rest des Strahlreglereinsatzes aus Kunststoff gefertigt sein, was nicht nur im Hinblick auf die Kosten und die Vermeidung von Verstopfungen, sondern auch im Hinblick auf mögliche hygienische Bedenken besonders vorteilhaft erscheint.

Der Strahlreglereinsatz bzw. die Strahlpumpe kann dann mit seiner bzw. ihrer kreiszylindrischen Wand in einen O-Ring eingepresst sein, welcher wiederum am Innenumfang des Durchlaufrohrabschnitts anliegt, bevorzugt in einer am Innenumfang des Durchlaufrohrabschnitts dafür vorgesehenen, beispielsweise eingefrästen Ringnut.

Um den Wirkungsgrad der Mischanordnung in der Zapfhahnauslauftülle weiter zu steigern können mehrere, insbesondere mindestens drei strömungsmäßig in Reihe angeordnete Venturidüsen, insbesondere Strahlreglereinsätze für Wasserhahn-Strahlregler nach oben beschriebener Art vorgesehen sein. Der Saugleitungseinlass jeder Strahlpumpe ist dabei mit ihrem Auslass verbunden und von ihrem Treibleitungseinlass getrennt.

Durch Kombination mehrerer Strahlregler mit verschiedenen Treibdüsen(platten) in einem Imprägnierer gelingt ferner eine weitere Anpassung des Imprägnierers an die unterschiedlichsten Anforderungen bezüglich der Durchflussrate, der Art und des Drucks des zu lösenden Imprägniergases und des Getränkevorprodukts.

Wenn der Durchlaufrohrabschnitt dabei von einem separaten Bauteil und der Auslaufrohrabschnitt ebenfalls von einem separaten Bauteil gebildet wird lässt sich die Zapfhahnauslauftülle einfach zerlegen und reinigen. Vorteilhaft wird der Durchlaufrohrabschnitt daher von einem Durchlaufrohr gebildet, welches an seinem oberen Ende mit einem Innengewinde versehen ist, um die Zapfhahnauslauftülle auf den Zapfhahn aufzuschrauben, und welches an seinem unteren Ende mit einem Außengewinde versehen ist, wobei der Auslaufrohrabschnitt von einem Auslaufrohr gebildet wird, das an seinem oberen Ende mit einem dem Außengewinde am unteren Ende des Durchlaufrohrs entsprechenden Innengewinde versehen ist, um das Auslaufrohr auf das Durchlaufrohr aufzuschrauben.

Weiterhin vorteilhaft ist in dem Auslaufrohrabschnitt eine Strömungslaminarisierungsanordnung aufgenommen, beispielsweise wie sie von Zapfhähnen für Stout-Biere bereits bekannt ist. Die Strömungslaminarisierungsanordnung kann eine Düsenanordnung mit einer Mehrzahl, vorzugsweise zwei gegenüber dem Innenquerschnitt des Durchlaufrohrs kleinen und den Durchtrittsöffnungen der Strahlpumpen-Siebgitter großen Düsenlöchern aufweisen, sowie eine den Düsenlöchern zugewandte Prallfläche, vorzugsweise Prallplatte stromab der Düsenanordnung, auf die die Düsenlöcher gerichtet sind.

Soll Kaffee nitrogenisiert werden ist im Zulaufabschnitt der Schankleitung vorteilhaft ein Sieb eingebaut, welches verhindert, dass etwaige, im Kaffee enthaltene Festkörperrückstände weiter in die Schankleitung gelangen.

Vorteilhafte Weiterbildungen sind Gegenstand der weiteren Unteransprüche.

So kann am Zapfhahn oder an einem dem Zapfhahn unmittelbar vorgeordneten Bereich der Schankleitung oberhalb der Zapfhahnauslauftülle syphonartig ein Gassammelraum vorgesehen sein. Dadurch wird erreicht, dass sich in einer Zapfpause aus dem Volumenstrom entmischende Gasblasen an diesem höchsten Punkt, also in dem Gassammelraum ansammeln können. Bei einem Zapfneustart steht das dort gesammelte Gas dann sofort zur Verfügung, um erneut in den nachströmenden Volumenstrom eingemischt zu werden, so dass das Zapfergebnis auch direkt nach der Zapfpause homogen ist.

Nachfolgend werden anhand der beiliegenden Zeichnungen vorteilhafte Ausführungsformen der Erfindung näher erläutert. Es zeigen:
- Figur 1: eine Schankanlage gemäß einer ersten Ausführungsform der Erfindung;
- Figur 2: eine Schankanlage gemäß einer zweiten Ausführungsform gemäß der Erfindung;
- Figur 3: eine mit einer Zapfhahnauslauftülle gemäß einer Ausführungsform der Erfindung versehenen Zapfhahn zur Verwendung in den in Fig. 1 und 2 gezeigten Schankanlagen;
- Figur 4: die auf den in Fig. 3 gezeigten Zapfhahn aufgeschraubte Zapfhahnauslauftülle;
- Figur 5: einen Ausschnitt aus Fig. 4;
- Figur 6: ausschnittsweise und schematisch eine Schankanlage gemäß einer weiteren Ausführungsform der Erfindung mit Zapfhahnauslauftülle;
- Figur 7: ausschnittsweise und schematisch eine Schankanlage mit einem Binderohr;
- Figur 8: eine Kompaktschankanlage gemäß der in Figur 1 gezeigten Ausführungsform der Erfindung;
- Figur 9: eine Kompaktschankanlage gemäß einer weiteren Ausführungsform der Erfindung.

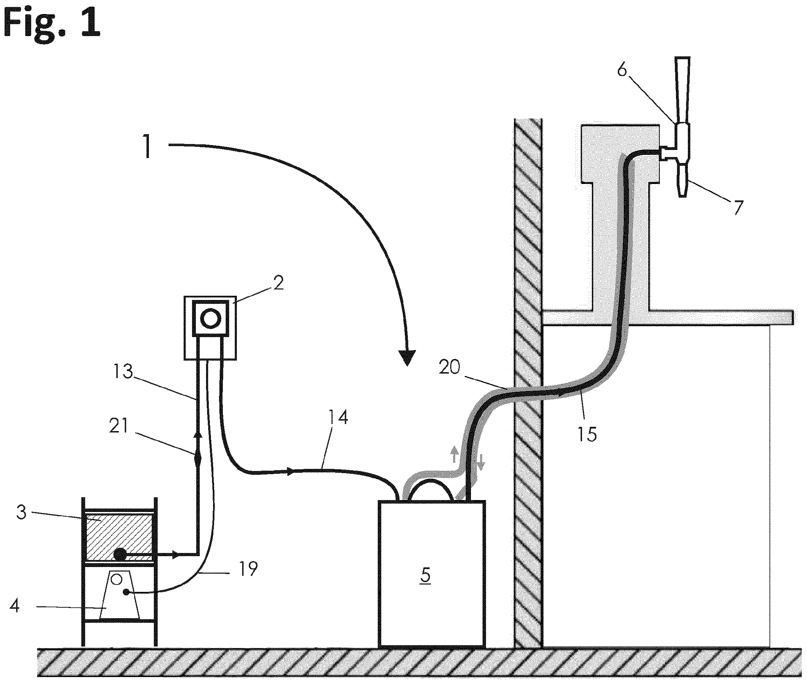

Zunächst wird Bezug genommen auf Fig. 1. Darin ist eine insgesamt mit 1 bezeichnete Schankanlage dargestellt, wie sie in Gaststätten oder auch bei Veranstaltungen mit mobilem Charakter (Freiluft, Catering, Festveranstaltungen) häufig zum Einsatz kommt. Die Schankanlage 1 hat eine warme Seite, nämlich einen ungekühlten Lagerraum, sowie eine kalte Seite, nämlich einen Schanktresen in einem Schankraum.

Im Lagerraum sind dabei Getränkebehälter 3 mit Kaffee gelagert, nämlich Bag-in-Box-Behälter, wobei der Getränkesack jeweils über ein Ventil oder über dergleichen an einer Saugleitung 13 angeschlossen ist. In der Saugleitung 13 ist ein Siebadapter 21 eingebaut, der verhindert, das etwaige, noch im Kaffee enthaltene Kaffeebrösel in die zu einem Zapfhahn 6 führende Schankleitung 13, 14, 15 gelangt, die von der Saugleitung 13, einem mittleren, ungekühlten Schankleitungsabschnitt 14 und einem zapfhahnseitigen, gekühlten Schankleitungsabschnitt 15 gebildet wird

Der zur Förderung des Kaffees nötige Förderdruck wird durch eine Förderpumpe 2 aufgebaut, die saugend an die Saugleitung 13 angeschlossen ist. Als Antriebsmittel für die Förderpumpe 2 dient Druckluft, die von einem Druckluftkompressor 4 erzeugt und der Förderpumpe 2 über eine Gasleitung 19 zugeführt wird. Die vom Druckluftkompressor 4 erzeugte Druckluft enthält 78% N₂ und wird gleichzeitig als Nitrogenisierungsmittel für den Kaffee verwendet. Dazu ist im Pumpengehäuse eine nicht näher bezeichnete Einmischeinrichtung vorgesehen, die ebenfalls an die Gasleitung 19 angeschlossen ist und an der das Gas in den Kaffee in der Schankleitung 13, 14, 15 eingemischt wird.

Die Einmischeinrichtung kann dabei ein Einmischventil stromab der Förderpumpe 2 aufweisen, sowie eine Gasdosiereinrichtung, wie sie in dem eigenen Patent DE 10 2015 010 783 B3 beschrieben ist. Diesbezüglich wird die DE 10 2015 010 783 B3 hier vollumfänglich miteinbezogen
Grundsätzlich ist es aber zweitrangig, wie das Gas zugesetzt wird. So wäre auch eine direkte Zuführung des Gases in die Schankleitung mit Überdruck und Nadelventil denkbar.

Im mittleren Schankleitungsabschnitt 14 fließt somit ein Gemischstrom aus N₂ und dem als Getränkevorprodukt dienenden Kaffee in Richtung Zapfhahn 6. In Das N₂ befindet sich somit zwar in dem Gemischstrom, ist darin jedoch nicht gelöst, sondern in relativ großem Gasblasen enthalten.

Anschließend wird der Gemischstrom durch einen Durchlaufkühler 5 geleitet, im vorliegenden Ausführungsbeispiel ein Nasskühler, und dadurch gekühlt und erreicht somit die kalte Seite der Schankanlage, im vorliegenden Fall den Schanktresen im Schankraum. Vom Durchlaufkühler 5 aus gelangt der Gemischvolumenstrom in den letztlich zum Zapfhahn 6 führenden gekühlten Schankleitungsabschnitt 15. Dabei wird die Kühlung noch durch eine um die Zapfleitung herumlaufende Begleitkühlleitung 20 unterstützt, die an den Nasskühler 5 angeschlossen ist und in der das dort verwendete Eiswasser zum Zapfhahn 6 hin und wieder zurück zum Nasskühler 8 zirkuliert, um ein Wiedererwärmen des fertigen Getränks auf dem Weg zum Zapfhahn 6 zu verhindern. Das Temperaturniveau im Binderohr entspricht somit der Trinktemperatur des kalten Kaffees.

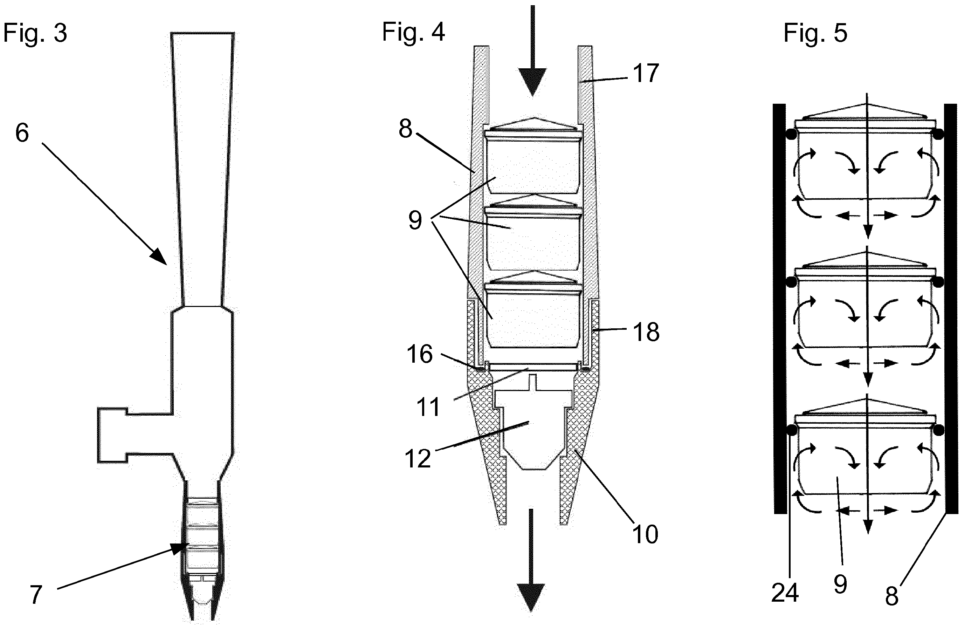

Wie insbesondere Figur 3 zeigt ist auf das Auslaufende des Zapfhahns 6 eine Zapfhahnauslauftülle 7 aufgeschraubt, die nachstehend noch weiter erläutert werden wird und die zum Durchmischen des Getränkevorprodukt-Gasblasen-Volumenstroms unter Zerkleinerung der enthaltenen Gasblasen dient, so dass der gezapfte kalte Kaffee eine cremige Schaumkrone nach Art eines Stout-Bieres erhält.

Aufgrund der Trennung des Mischventils von der Zapfhahnauslauftülle 7 ist es auf einfache Weise möglich, die Zapfhahnauslauftülle 7 abzunehmen, auszutauschen oder zu reinigen.

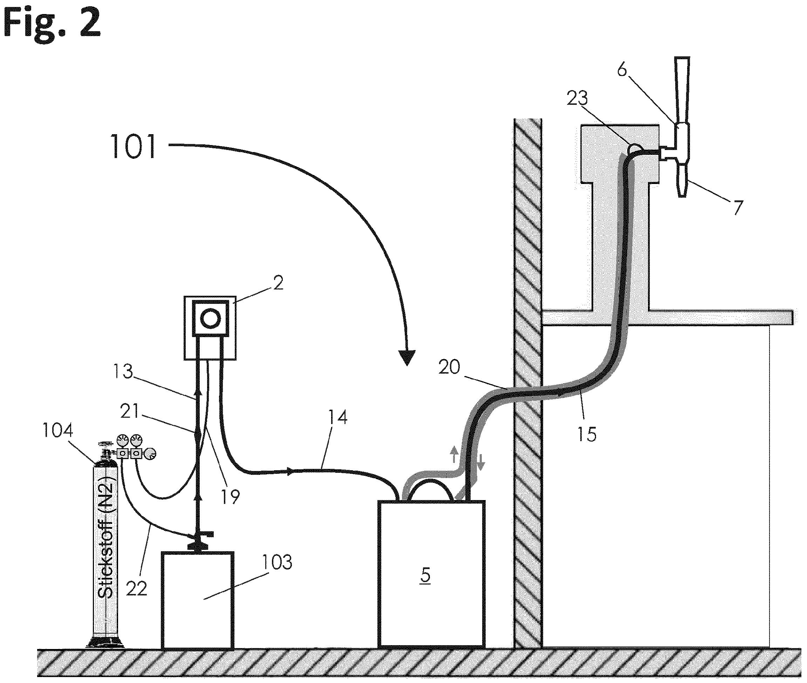

Die in der Fig. 2 gezeigte Schankanlage 101 unterscheidet sich von der in Fig .1 gezeigten Schankanlage 1 dadurch, dass als Druckgasquelle eine mit N₂ gefüllte Druckgasflasche 103 dient und als Getränkevorproduktquelle ein mit kaltem Kaffee gefülltes KEG-Fass. Neben der von der Druckgasflasche zur Förderpumpe 2 und dem Einmischventil führenden Gasleitung 19 ist die Druckgasflasche ferner über eine weitere Gasleitung 22 mit dem KEG-Fass 103 verbunden, um den kalten Kaffee auszutreiben. Weiterhin ist hier an einem dem Zapfhahn 6 unmittelbar vorgeordneten Bereich der Schankleitung 13, 14, 15 oberhalb der Zapfhahnauslauftülle 7 ein syphonartiger Gassammelraum 23 vorgesehen, in dem sich in Zapfpausen ausgasende Gasblasen sammeln können, die dann beim erneuten Zapfen gleich wieder zum Einmischen bereitstehen, so dass sich auch direkt nach Zapfpausen ein gutes Zapfergebnis einstellt, nämlich ein kaltes Kaffeegetränk mit einer stabilen und cremigen Schaumkrone.

Fig. 4 zeigt die in den Schankanlagen gemäß Fig.1 und 2 auf den Zapfhahn 6 aufgeschraubte Zapfhahnauslauftülle 7. Diese weist ein zylindrisches Durchlaufrohr 8 und ein sich verjüngendes Auslaufrohr 10 auf, die mittels Gewinde 18 zusammengeschraubt sind, wobei die Verschraubung mittels eines 0-Rings 16 abgedichtet ist. Am oberen Ende des Durchlaufrohrs 8 befindet sich ein weiteres Außengewinde 17, an dem die Zapfhahnauslauftülle 7 auf den Zapfhahn 6 aufgeschraubt werden kann. Im Durchlaufrohr 8 sind drei aus Kunststoff bestehende Strahlreglereinsätze 9 in Strömungsrichtung in Reihe nacheinander angeordnet, wie sie für Wasserhahn-Strahlregler (sog. Perlatoren) verwendet werden. Im Auslaufrohr 10 befindet sich eine Lochplatte 11 (sog. Creamer Plate) mit einem eine der Lochplatte 11 zugewandte Prallfläche aufweisenden Prallflächenträgerzapfen 12, die zusammen als Strömungslaminarisierungseinrichtung 11, 12 dienen, wie dies beim Ausschank von Stout-Bieren bereits herkömmlich gemacht wird.

Die Strömungsverhältnisse bei jedem der Strahlreglereinsätze 9 sind dabei quantitativ der Figur 5 zu entnehmen. Durch den dachförmigen, als Siebhaube ausgebildeten Treibleitungseinlass strömt dabei das Getränkevorprodukt-GasGemisch in je nach Lage des Strahlreglereinsatzes 9 in dem Durchlaufrohr 8 mehr oder weniger stark vermischter Form durch eine am Treibleitungseinlass vorgesehene Treibdüsenplatte in eine Mischkammer des Strahlreglereinsatzes 9. Von dort gelangt die Strömung durch ein den Pumpenauslass des Strahlreglereinsatzes 9 bildendes Diffusorsieb an der Unterseite des Strahlreglereinsatzes 9 wieder heraus.

Während ein Teil des den Strahlreglereinsatz 9 verlassenden Massenstroms zum Treibleitungseinlass des nächsten Strahlreglereinsatzes 9 in der Strahlreglerreihe bzw. zum Auslassrohr 10 der Zapfhahnauslauftülle 7 strömt, wird ein anderer Teil zu über den Umfang verteilten, in der vorliegenden schematisierten Darstellung nicht gezeigten Einlassschlitzen zurückgesogen, welche als Saugleitungen bzw. als Saugleitungseinlässe dienen und zurück in die Mischkammer des Strahlreglereinsatzes 9 führen. Jeder der Strahlreglereinsätze 9 ist dabei als Ganzes aus Kunststoff gefertigt, wodurch Anhaftungen/Verkalkungen vermieden werden, welche die Treibdüsenplatte und das Diffusorsieb verstopfen könnten. Auch aus Gründen der Lebensmittelhygiene ist dies besonders vorteilhaft.

Wie der Figur 5 weiter zu entnehmen ist, ist dabei ein ringförmiger Spalt zwischen dem Außenumfang jedes Strahlreglereinsatzes 9 und dem Innenumfang des Durchlaufrohrs 8 vorhanden, an dem die aus dem Pumpenauslass des Strahlreglereinsatzes 9 austretende Strömung zu den Einlassschlitzen zurückströmen kann, welche am Außenumfang des Strahlreglereinsatzes 9 stromab eines O-Rings 24 vorgesehen sind. Nach dem erneuten Eintritt durch die Einlassschlitze am Umfang des Strahlreglereinsatzes 9 wird der somit als Saugmedium anzusehende Strömungsanteil wiederum von dem als Treibmedium in den Strahlreglereinsatz 9 am Treibleitungseinlass einströmenden Gemischstrom unter Ausbildung von heftigen Turbulenzen mitgerissen, wodurch es zu einer weiteren Durchmischung und Gasblasenzerkleinerung kommt.

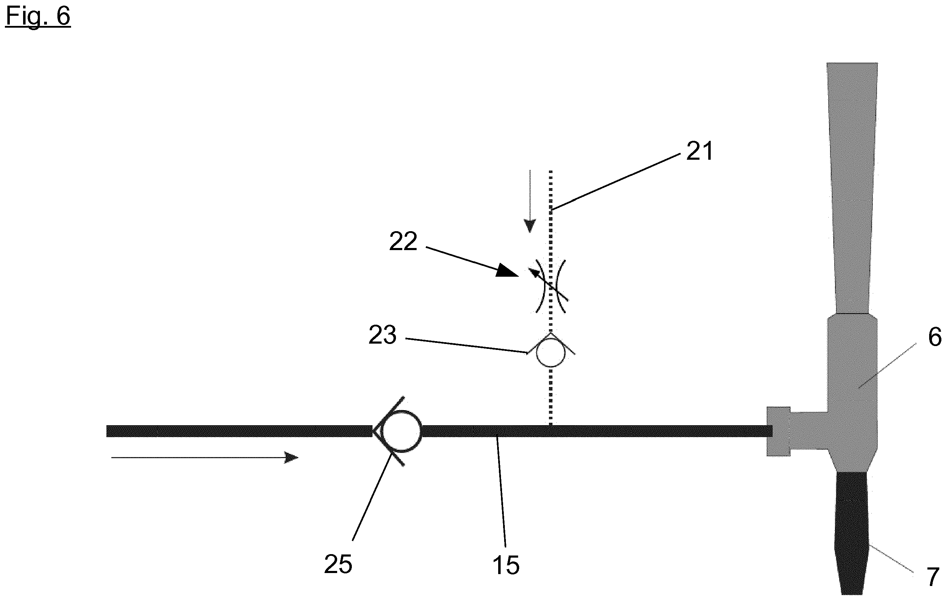

Die Figur 6 zeigt einen Abschnitt 15 einer Schankleitung, in den eine Gaszufuhrleitung 21 mündet, wobei die Schankleitung zu einem Zapfhahn 6 mit einer darauf gesetzten Zapfhahnauslauftülle 7 führt. Die Gaszufuhrleitung 21 ist dabei über ein voreinsellbares Nadelventil 22 an die Schankleitung angebunden, wobei Rückschlagventile 23, 25 verhindern, dass Gas in den stromauf gelegen Abschnitt der Schankleitung eindringt oder Flüssigkeit in die Gaszufuhrleitung 21. Die Zapfhahnauslauftülle 7, auf die später noch näher eingegangen werden wird fungiert hier als Mischzelle, in der die Flüssigkeit mit dem zugeführten Gas vermischt wird bzw. in der die Gasblasen in der Flüssigkeit zerkleinert werden.

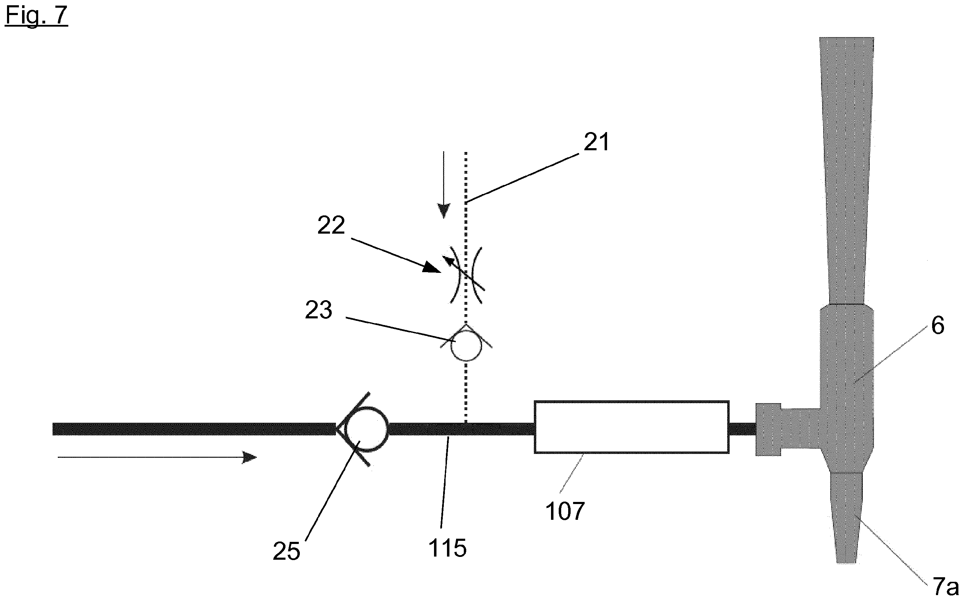

Figur 7 zeigt einen ganz ähnlichen Aufbau wie Figur 6, wobei jedoch anstatt einer als Mischzelle fungierenden Zapfhahnauslauftülle 7 eine gewöhnliche Zapfhahnauslauftülle 7a vorgesehen ist und als Mischzelle ein ebenfalls weiter unten näher erläutertes Binderohr 107 vorgesehen ist, welches in den zum Zapfhahn 6 führenden Abschnitt 115 der Schankleitung eingebaut ist.

Falls die Zapfhahnauslauftülle die Mischanordnung aufweist, kann der Anschluss der Druckgasquelle an die Schankleitung unmittelbar vor dem Zapfhahn angeordnet sein.

Falls zum Vermischen des Gases mit dem flüssigen Getränkevorprodukt ein Binderohr vorgesehen ist, kann dieses unmittelbar vor dem Zapfhahn in der Schankleitung angeordnet sein, wobei dann der Anschluss der Druckgasquelle an die Schankleitung unmittelbar vor dem Binderohr einmündet.

Als Fördereinrichtung für das Getränkevorprodukt kann sowohl eine pneumatisch angetriebene Pumpe als auch eine elektrisch angetriebene Pumpe eingesetzt werden.

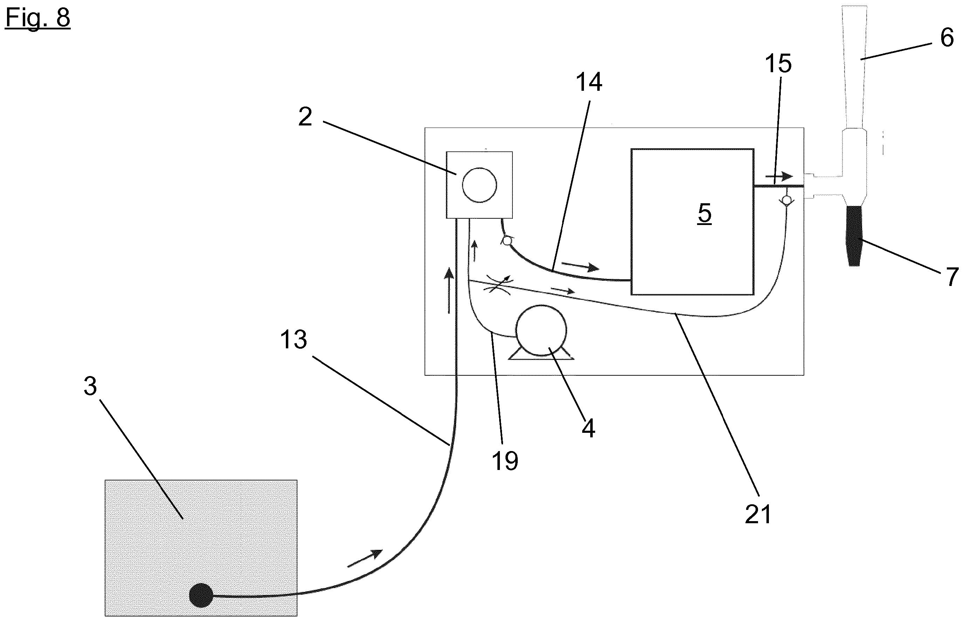

Die in Figur 8 gezeigte Schankanlage ist dabei als Kompakt-Schankanlage aufgebaut und weist ein nicht näher bezeichnetes, gemeinsames Gehäuse auf, in dem alle wesentlichen Teile der Schankanlage untergebracht sind, nämlich ein als Druckgasquelle 4 dienender Kompressor 4, eine pneumatisch angetriebene Membranpumpe 2, sowie ein als Kühleinrichtung 5 dienender Durchlaufkühler 5, wobei der Zapfhahn 6 mit der darauf aufgeschraubten Zapfhahnauslauftülle 7 an dem Gehäuse angebracht ist. Die als Fördereinrichtung 2 dienende Membranpumpe 2 ist dabei über eine Saugleitung 13 an einen als Bag-in-Box-Behälter ausgebildeten Getränkebehälter 3 angeschlossen. Die Saugleitung 13 kann dabei als einfacher Plastikschlauch ausgebildet sein und mit einem fachnotorisch bekannten Aufsatz zur Ankopplung an Bag-in-Box-Getränkesäcke versehen sein. Vom Druckluftkompressor 4 führt dabei eine Versorgungsleitung 19 zur Membranpumpe 2, über welche die Membranpumpe 2 mit dem zum Antrieb der Membranpumpe 2 nötigen pneumatischen Druck versorgt wird.

Von der Versorgungsleitung 19 zweigt eine Gaszufuhrleitung 21 ab, die stromab des Durchlaufkühlers 5 in einen den Durchlaufkühler 5 mit dem Zapfhahn 6 verbindenden Abschnitt 15 der Schankleitung 13, 14, 15 mündet. Dabei verbindet ein mittlerer Abschnitt 14 der Schankleitung 13, 14, 15 die Membranpumpe 2 mit dem Durchlaufkühler 5.

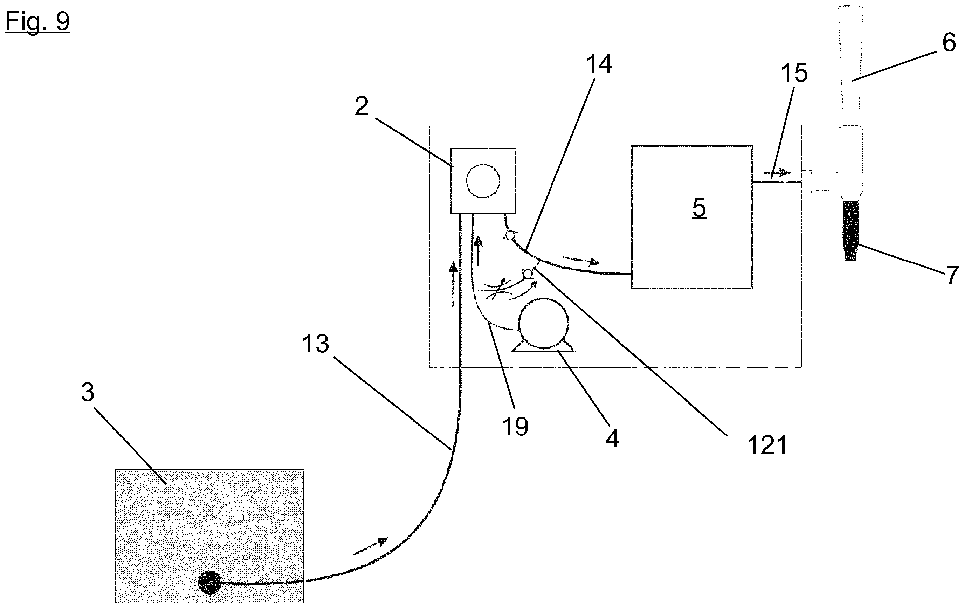

Die in Figur 9 gezeigte Schankanlage entspricht weitgehend der in Figur 8 gezeigten, wobei jedoch die in die Schankleitung 13, 14, 15 mündende Gaszufuhrleitung 121 in den stromauf des Durchlaufkühlers 5 vorgesehenen, mittleren Abschnitt 14 der Schankleitung 13, 14, 15 mündet. Es hat sich jedoch gezeigt, dass die in die Schankleitung eingespeiste Druckluft eben auch nahezu 21 Prozent O₂ enthält, so dass das Getränk in der Schankleitung während längerer Zapfpausen, also etwa beispielsweise über Nacht, oxidiert. Da dies in den wenigsten Fällen gewünscht ist, ist es günstig, wenn die Gaszufuhrleitung wie in Figur 8 gezeigt unmittelbar vor dem Zapfhahn in die Schankleitung mündet, weil dadurch Ausschuss vermieden werden kann.

Selbstverständlich sind Abwandlungen und Modifikationen der gezeigten Ausführungsformen möglich, ohne den Rahmen der Erfindung zu verlassen.

## Patentansprüche

1. Zapfhahnauslauftülle (7) für einen Zapfhahn (6) einer Schankanlage (1; 101), der zum Zapfen eines aus einem Getränkevorprodukt und einem Gas, nämlich CO₂, N₂, oder Druckluft bestehenden Volumenstroms dient, mit einem vorzugsweise zylindrischen Durchlaufrohrabschnitt (8) und einem sich auslaufseitig daran anschließenden Auslaufrohrabschnitt (10), wobei zwischen der Einlaufseite des Durchlaufrohrabschnitts (8) und dem Auslaufrohrabschnitt (10) eine Mischanordnung aufgenommen ist, die geeignet ist, von dem Gemisch aus dem Getränkevorprodukt und darin enthaltenen Gasblasen durchströmt zu werden und dabei die Gasblasen zu zerkleinern, **dadurch gekennzeichnet, dass** sich der Auslaufrohrabschnitt (10) verjüngt.

2. Zapfhahnauslauftülle (7) nach Anspruch 1, **dadurch gekennzeichnet, dass** die Mischanordnung eine Anzahl, insbesondere eine Mehrzahl parallel und/oder in Serie zu durchströmender Strahlpumpen umfasst, und/oder eine Mehrzahl von zu durchströmenden Siebgittern, vorzugsweise mit sich in Strömungsrichtung verjüngenden und/oder erweiternden Durchtrittsöffnungen.

3. Zapfhahnauslauftülle (7) nach Anspruch 1 oder 2, **dadurch gekennzeichnet, dass** die Mischanordnung eine Anzahl, insbesondere Mehrzahl, vorzugsweise drei strömungsmäßig in dem Durchlaufrohrabschnitt (8) in Serie angeordneter Strahlreglereinsätze (9) aufweist, insbesondere Strahlreglereinsätze (9) für Wasserhahn-Strahlregler, beispielsweise für Wasserhahn-Strahlregler der Fa. Neoperl AG, welche vorzugsweise aus Kunststoff bestehen.

4. Zapfhahnauslauftülle (7) nach Anspruch 1, 2 oder 3, **dadurch gekennzeichnet, dass** der Durchlaufrohrabschnitt (8) von einem Durchlaufrohr (8) gebildet wird, das an seinem oberen Ende mit einem Innengewinde (17) versehen ist, um die Zapfhahnauslauftülle (7) auf den Zapfhahn (6) aufzuschrauben, und an seinem unteren Ende mit einem Außengewinde, wobei der Auslaufrohrabschnitt (10) von einem Auslaufrohr (10) gebildet wird, das an seinem oberen Ende mit einem dem Außengewinde am unteren Ende des Durchlaufrohrs (8) entsprechenden Innengewinde (18) versehen ist, um das Auslaufrohr (8) auf das Durchlaufrohr (10) aufzuschrauben.

5. Zapfhahnauslauftülle (7) nach einem der vorhergehenden Ansprüche, **dadurch gekennzeichnet, dass** in dem Auslaufrohrabschnitt (10) eine Strömungslaminarisierungsanordnung (11,12) aufgenommen ist, die eine Düsenanordnung mit einer Mehrzahl, vorzugsweise zwei gegenüber dem Innenquerschnitt des Durchlaufrohrs kleinen und den Durchtrittsöffnungen der Siebgitter großen Düsenlöchern aufweist, sowie eine den Düsenlöchern zugewandte Prallfläche, vorzugsweise Prallplatte stromab der Düsenanordnung, auf die die Düsenlöcher gerichtet sind.

6. Zapfhahnauslauftülle (7) nach Anspruch 5, **dadurch gekennzeichnet, dass die** Düsenanordnung der Strömungslaminarisierungsanordnung (11,12) in Form einer Lochplatte (11) ausgebildet ist und die Prallfläche an einem Prallflächenträgerzapfen (12), wobei das Auslaufrohr (10) Innenschultern aufweist, an denen die Lochplatte (11) und der Prallflächenträgerzapfen (12) abgestützt sind.

7. Zapfhahnauslauftülle (7) nach einem der Ansprüche 3 bis 6, **dadurch gekennzeichnet, dass** die Anzahl Strahlreglereinsätze (9) jeweils über einen oder mehrere O-Ringe (24) dichtend am Innenumfang des Durchlaufrohrabschnitts (8) abgestützt ist, wobei am Innenumfang des Durchlaufrohrabschnitts vorzugsweise Ringnuten ausgenommen sind, in die jeweils einer der O-Ringe eingelegt ist.

8. Zapfhahnauslauftülle (7) nach einem der Ansprüche 3 bis 7, **dadurch gekennzeichnet, dass** jeder der Strahlreglereinsätze (9) eine Mischkammer umschließt und dazu einlassseitig ein erstes Siebgitter mit Durchtrittsöffnungen aufweist, das an eine umfangsseitig die Mischkammer begrenzende, zylindrische Wand anschließt, in der vorzugsweise Einlassschlitze ausgenommen sind, wobei auslassseitig ein zweites Siebgitter mit Durchtrittsöffnungen an die umfangsseitig die Mischkammer begrenzende Wand anschließt, deren Durchtrittsöffnungen vorzugsweise durch konzentrisch und radial verlaufende Stege beabstandet sind.

9. Zapfhahnauslauftülle (7) nach einem der vorhergehenden Ansprüche, **dadurch gekennzeichnet, dass** die Mischanordnung eine Anzahl strömungsmäßig in dem Durchlaufrohrabschnitt (8) in Serie angeordneter Strahlreglereinsätze (9) aufweist, wobei jeder der Strahlreglereinsätze (9) eine Mischkammer umschließt und dazu einlassseitig ein erstes Siebgitter mit Durchtrittsöffnungen aufweist, das an eine umfangsseitig die Mischkammer begrenzende, zylindrische Wand anschließt, und auslassseitig ein zweites Siebgitter mit Durchtrittsöffnungen an die umfangsseitig die Mischkammer begrenzende Wand anschließt.

10. Schankanlage (1;101) für Gasblasen enthaltende Getränke, insbesondere für nitrogenisierten Kaffee, oder nitrogenisiertes Bier mit einer Schankleitung (13,14,15), die von einer Getränkevorproduktquelle (3;103) wie einem KEG-Fass (103) oder einem Bag-In-Box-Behälter (3) zu einem Zapfhahn (6) führt, und einer an die Schankleitung (13,14,15) beispielsweise über ein Einmischventil angeschlossenen Druckgasquelle (4; 104), insbesondere einer mit N₂ oder CO₂ gefüllten Druckgasflasche (104) oder einem Druckluftkompressor (4), sowie einer Fördereinrichtung, um einen Volumenstrom durch die Schankleitung (13,14,15) zum Zapfhahn (6) zu fördern, beispielsweise eine Förderpumpe (2), **dadurch gekennzeichnet, dass** der Zapfhahn (6) mit einer Zapfhahnauslauftülle (7) nach einem der vorhergehenden Ansprüche versehen ist.

11. Schankanlage (101) nach Anspruch 10, **dadurch gekennzeichnet, dass** am Zapfhahn oder an einem dem Zapfhahn (6) unmittelbar vorgeordneten Bereich der Schankleitung (13, 14, 15) oberhalb der Zapfhahnauslauftülle (7) syphonartig ein Gassammelraum (23) vorgesehen ist.

12. Schankanlage für Gasblasen enthaltende Getränke, mit einer Schankleitung (13,14,15; 114), die von einer Getränkevorproduktquelle (3) zu einem Zapfhahn (6) führt, einer an die Schankleitung (13,14,15; 115) angeschlossenen Druckgasquelle (4), einer Fördereinrichtung (2), um einen Volumenstrom durch die Schankleitung (13,14,15) zum Zapfhahn (6) zu fördern, einer Volumenstromglättungseinrichtung (11) am Zapfhahn (6) oder am zapfhahnseitigen Ende der Schankleitung (13,14,15; 115), um den Volumenstrom beim Zapfen zumindest nahezu konstant zu halten, beispielsweise einer Lochplatte (11) im Zapfhahn oder in einer Zapfhahnauslauftülle (7; 7a), wobei der Zapfhahn (6) mit einer Zapfhahnauslauftülle (7) versehen ist, welche einen zylindrischen Durchlaufrohrabschnitt (8) und einen sich auslaufseitig daran anschließenden, sich verjüngenden Auslaufrohrabschnitt (10), aufweist, wobei zwischen der Einlaufseite des Durchlaufrohrabschnitts (8) und dem Auslaufrohrabschnitt (10) eine Mischanordnung (9) aufgenommen ist, die geeignet ist, von dem Gemisch aus dem Getränkevorprodukt und darin enthaltenen Gasblasen durchströmt zu werden und dabei die Gasblasen zu zerkleinern, wobei die Druckgasquelle (4) mit Überdruck und ungeregelt bei auf einen konstanten Wert festgelegtem Verhältnis von Gas- zu Flüssigkeitsvolumenstrom an die Schankleitung (13,14,15; 115) angeschlossen ist, wobei der Anschluss der Druckgasquelle (4) an die Schankleitung (13,14,15; 115) insbesondere über ein voreinstellbares Nadelventil (22) erfolgt.

13. Schankanlage nach Anspruch 12, **dadurch gekennzeichnet, dass** die Mischanordnung (9; 109) eine Anzahl, insbesondere Mehrzahl, vorzugsweise drei strömungsmäßig in dem Durchlaufrohrabschnitt (8) in Serie angeordneter Strahlreglereinsätze (9; 109) aufweist, insbesondere Strahlreglereinsätze (9; 109) für Wasserhahn-Strahlregler, welche vorzugsweise aus Kunststoff bestehen.

14. Schankanlage nach einem der vorhergehenden Ansprüche 10 bis 13, **dadurch gekennzeichnet, dass** die Druckgasquelle (4) von einem Druckluftkompressor (4) gebildet wird, wobei eine vom Druckluftkompressor (4) zur Schankleitung (13,14,15; 115) führende Gaszufuhrleitung (21; 121) vorzugsweise über einen Luftfilter, insbesondere einen Mikroluftfilter geführt ist.

15. Verfahren zur Herstellung nitrogenisierten Kaffees oder Biers in einer Schankanlage, **dadurch gekennzeichnet, dass** der Kaffee oder das Bier in einer Schankanlage (1;101) nach Anspruch 10 bis 14 nitrogenisiert wird.

## Claims

1. Tap outlet nozzle (7) for a tap (6) of a dispensing system (1; 101), which serves to tap a volume flow consisting of a beverage precursor and a gas, namely CO₂, N₂, or compressed air, having a preferably cylindrical through-flow pipe section (8) and an outlet pipe section (10) adjoining it on the outlet side, wherein a mixing arrangement is accommodated between the inlet side of the through-flow pipe section (8) and the outlet pipe section (10), which mixing arrangement is suitable for being flowed through by the mixture of the beverage precursor and gas bubbles contained therein, and for comminuting the gas bubbles in the process, **characterized in that** the outlet pipe section (10) tapers.

2. Tap outlet nozzle (7) according to claim 1, **characterized in that** the mixing arrangement comprises a number, in particular a plurality, of jet pumps to be flowed through in parallel and/or in series, and/or a plurality of screen grids to be flowed through, preferably with passage openings tapering and/or widening in the flow direction.

3. Tap outlet nozzle (7) according to claim 1 or 2, **characterized in that** the mixing arrangement has a number of jet regulator inserts (9), in particular a plurality, preferably three thereof, which are arranged in series with respect to flow in the through-flow pipe section (8), in particular jet regulator inserts (9) for water tap jet regulators, for example for water tap jet regulators of the company Neoperl AG, which preferably consist of plastic.

4. Tap outlet nozzle (7) according to claim 1, 2 or 3, **characterized in that** the through-flow pipe section (8) is formed by a flow pipe (8) which is provided at its upper end with an internal thread (17) in order to screw the tap outlet nozzle (7) onto the tap (6), and at its lower end with an external thread, wherein the outlet pipe section (10) is formed by an outlet pipe (10) which is provided at its upper end with an internal thread (18) corresponding to the external thread at the lower end of the flow pipe (8) in order to screw the outlet pipe (8) onto the flow pipe (10).

5. Tap outlet nozzle (7) according to one of the preceding claims, **characterized in that** a flow laminarization arrangement (11, 12) is accommodated in the outlet pipe section (10), which arrangement has a nozzle arrangement with a plurality of nozzle holes, preferably two thereof, which are small relative to the internal cross-section of the flow pipe and large relative to the passage openings of the screen grids, and an impact surface facing the nozzle holes, preferably an impact plate downstream of the nozzle arrangement, against which the nozzle holes are directed.

6. Tap outlet nozzle (7) according to claim 5, **characterized in that** the nozzle arrangement of the flow laminarization arrangement (11, 12) is in the form of a perforated plate (11) and the impact surface is formed on an impact surface carrier pin (12), wherein the outlet pipe (10) has inner shoulders on which the perforated plate (11) and the impact surface carrier pin (12) are supported.

7. Tap outlet nozzle (7) according to one of claims 3 to 6, **characterized in that** the number of jet regulator inserts (9) is in each case supported in a sealing manner on the inner circumference of the through-flow pipe section (8) via one or more O-rings (24), wherein annular grooves are preferably recessed on the inner circumference of the through-flow pipe section, into each of which annular grooves one of the O-rings is inserted.

8. Tap outlet nozzle (7) according to one of claims 3 to 7, **characterized in that** each of the jet regulator inserts (9) encloses a mixing chamber and for this purpose has on the inlet side a first screen grid with passage openings which adjoins a cylindrical wall delimiting the mixing chamber on the circumferential side, in which wall preferably inlet slots are recessed, wherein a second screen grid with passage openings on the outlet side adjoins the wall delimiting the mixing chamber on the circumferential side, the passage openings of which wall are preferably spaced apart by concentrically and radially extending webs.

9. Tap outlet nozzle (7) according to one of the preceding claims, **characterized in that** the mixing arrangement has a number of jet regulator inserts (9) arranged in series in terms of flow in the through-flow pipe section (8), wherein each of the jet regulator inserts (9) encloses a mixing chamber and for this purpose has on the inlet side a first screen grid with passage openings which adjoins a cylindrical wall delimiting the mixing chamber on the circumferential side, and on the outlet side a second screen grid with passage openings which adjoins the wall delimiting the mixing chamber on the circumferential side.

10. Dispensing system (1; 101) for beverages containing gas bubbles, in particular for nitrogenized coffee, or nitrogenized beer, having a dispensing line (13, 14, 15) which leads from a beverage precursor source (3; 103), such as a KEG drum (103) or a bag-in-box container (3), to a tap (6), and a compressed gas source (4; 104), in particular a compressed gas cylinder (104) filled with N₂ or CO₂ or a compressed-air compressor (4), which is connected to the dispensing line (13, 14, 15) via an admixture valve, for example, and a conveying device for conveying a volume flow through the dispensing line (13, 14, 15) to the tap (6), for example a feed pump (2), **characterized in that** the tap (6) is provided with a tap outlet nozzle (7) according to one of the preceding claims.

11. Dispensing system (101) according to claim 10, **characterized in that** a gas collecting chamber (23) is provided in the manner of a syphon on the tap or on a region of the dispensing line (13, 14, 15) directly upstream of the tap (6) above the tap outlet nozzle (7).

12. Dispensing system for beverages containing gas bubbles, having a dispensing line (13, 14, 15; 114), which leads from a beverage precursor source (3) to a tap (6), a compressed gas source (4) connected to the dispensing line (13, 14, 15; 115), a conveying device (2) for conveying a volume flow through the dispensing line (13, 14, 15) to the tap (6), a volume flow smoothing device (11) at the tap (6) or at the tap-side end of the dispensing line (13, 14, 15; 115), in order to keep the volume flow during dispensing at least virtually constant, for example a perforated plate (11) in the tap or in a tap outlet nozzle (7), wherein the tap (6) is provided with a tap outlet nozzle (7) which has a cylindrical through-flow pipe section (8) and a tapering outlet pipe section (10) adjoining said section on the outlet side, wherein a mixing arrangement (9) is accommodated between the inlet side of the through-flow pipe section (8) and the outlet pipe section (10), which is suitable for being flowed through by the mixture of the beverage precursor and gas bubbles contained therein and thereby comminuting the gas bubbles, wherein the compressed gas source (4) is connected to the dispensing line (13, 14, 15; 115) with excess pressure and unregulated at a ratio of gas to liquid volume flow fixed to a constant value, wherein the connection of the compressed gas source (4) with the dispensing line (13, 14, 15; 115) occurs in particular via a presettable needle valve (22).

13. Dispensing system according to claim 12, **characterized in that** the mixing arrangement (9; 109) has a number of jet regulator inserts (9; 109), in particular a plurality, preferably three thereof, which are arranged in terms of flow in series in the through-flow pipe section (8), in particular jet regulator inserts (9; 109) for water tap jet regulators, which preferably consist of plastic.

14. Dispensing system according to one of the preceding claims 10 to 13, **characterized in that** the compressed gas source (4) is formed by a compressed-air compressor (4), wherein a gas supply line (21; 121) leading from the compressed-air compressor (4) to the dispensing line (13, 14, 15; 115) is preferably guided via an air filter, in particular a microair filter.

15. Method for producing nitrogenized coffee or beer in a dispensing system, **characterized in that** the coffee or beer is nitrogenized in a dispensing system (1; 101) according to claim 10 to 14.

## Revendications

1. Bec verseur de robinet de débit (7) pour un robinet de débit (6) d'une installation de débit (1; 101), qui sert à tirer un débit volumique se composant d'un précurseur de boisson et d'un gaz, à savoir de CO₂, de N₂ ou d'air comprimé, comprenant une section de tuyau de passage (8) de préférence cylindrique et une section de tuyau de sortie (10) contiguë à celle-ci du côté de sortie, dans lequel un ensemble de mélange est reçu entre le côté d'entrée de la section de tuyau de passage (8) et la section de tuyau de sortie (10) et est adapté pour être traversé par le mélange se composant du précurseur de boisson et de bulles de gaz qu'il contient, tout en réduisant en morceau les bulles de gaz, **caractérisé par le fait que** la section de tuyau de sortie (10) se rétrécit.

2. Bec verseur de robinet de débit (7) selon la revendication 1, **caractérisé par le fait que** ledit ensemble de mélange comprend un nombre, en particulier une pluralité de pompes à jet à traverser parallèlement et/ou en série, et/ou une pluralité de grilles-tamis à traverser, de préférence avec des ouvertures de passage se rétrécissant et/ou s'élargissant dans la direction d'écoulement.

3. Bec verseur de robinet de débit (7) selon la revendication 1 ou 2, **caractérisé par le fait que** ledit ensemble de mélange comprend un nombre, en particulier une pluralité, de préférence trois inserts de mousseur (9) disposés fluidiquement en série dans la section de tuyau de passage (8), en particulier des inserts de mousseur (9) pour des mousseurs de robinet, par exemple pour des mousseurs de robinet de la société Neoperl AG, qui sont faits, de préférence, de matière plastique.

4. Bec verseur de robinet de débit (7) selon la revendication 1, 2 ou 3, **caractérisé par le fait que** la section de tuyau de passage (8) est formé par un tuyau de passage (8) qui est muni, à son extrémité supérieure, d'un filetage intérieur (17) pour visser le bec verseur de robinet de débit (7) sur le robinet de débit (6), ainsi que, à son extrémité inférieure, d'un filetage extérieur, dans lequel la section de tuyau de sortie (10) est formée par un tuyau de sortie (10) qui est muni, à son extrémité supérieure, d'un filetage intérieur correspondant au filetage extérieur à l'extrémité inférieure du tuyau de passage (8), afin de visser le tuyau de sortie (8) sur le tuyau de passage (10).

5. Bec verseur de robinet de débit (7) selon l'une quelconque des revendications précédentes, **caractérisé par le fait que** dans la section de tuyau de sortie (10) est reçu un ensemble de laminarisation d'écoulement (11, 12) qui présente un ensemble de buse ayant une pluralité, de préférence deux trous de buse petits par rapport à la section transversale intérieure du tuyau de passage et grands par rapport aux ouvertures de passage des grille-tamis, ainsi qu'une chicane montrant vers les trous de buse, de préférence une chicane en aval de l'ensemble de buse vers laquelle les trous de buse sont dirigés.

6. Bec verseur de robinet de débit (7) selon la revendication 5, **caractérisé par le fait que** l'ensemble de buse de l'ensemble de laminarisation d'écoulement (11, 12) est réalisé sous la forme d'une plaque perforée (11) et que la chicane est formée sur un tenon de support de chicane (12), dans lequel le tuyau de sortie (10) présente des épaulements intérieurs sur lesquels sont appuyés la plaque perforée (11) et le tenon de support de chicane (12).

7. Bec verseur de robinet de débit (7) selon l'une quelconque des revendications 3 à 6, **caractérisé par le fait que** le nombre d'inserts de mousseur (9) est appuyé chacun à étanchéité par un ou plusieurs joints toriques (24) sur la circonférence intérieure de la section de tuyau de passage (8), de préférence des rainures annulaires étant ménagées sur la circonférence intérieure de la section de tuyau de passage, dans lesquelles est inséré respectivement un des joints toriques.

8. Bec verseur de robinet de débit (7) selon l'une quelconque des revendications 3 à 7, **caractérisé par le fait que** chacun des inserts de mousseur (9) entoure une chambre de mélange et présente, à cette fin, du côté d'entrée, une première grille-tamis ayant des ouvertures de passage qui est contiguë à une paroi cylindrique qui délimite côté périphérie ladite chambre de mélange et dans laquelle, de préférence, des fentes d'entrée sont ménagées, dans lequel une deuxième grille-tamis ayant des ouvertures de passage est contiguë, côté sortie, à la paroi délimitant côté périphérie ladite chambre de mélange, et dont les ouvertures de passage sont espacées de préférence par des nervures s'étendant de façon concentrique et radiale.

9. Bec verseur de robinet de débit (7) selon l'une quelconque des revendications précédentes, **caractérisé par le fait que** ledit ensemble de mélange comprend un nombre d'inserts de mousseur (9) disposés fluidiquement en série dans la section de tuyau de passage (8), dans lequel chacun des inserts de mousseur (9) entoure une chambre de mélange et présente, à cette fin, du côté d'entrée, une première grille-tamis ayant des ouvertures de passage qui est contiguë à une paroi cylindrique qui délimite côté périphérie ladite chambre de mélange, et qu'une deuxième grille-tamis ayant des ouvertures de passage est contiguë, côté sortie, à la paroi délimitant côté périphérie ladite chambre de mélange.

10. Installation de débit (1; 101) pour des boissons contenant des bulles de gaz, en particulier pour du café azoté ou de la bière azotée, comprenant une conduite de débit (13, 14, 15) qui est menée depuis une source de précurseur de boisson (3; 103), telle qu'un petit fût (103) ou un récipient de type bag-in-box (3), vers un robinet de débit (6), et une source de gaz comprimé (4; 104) raccordée à ladite conduite de débit (13, 14, 15) par exemple par une vanne de mélange, en particulier une bouteille à gaz comprime (104) remplie de N₂ ou de CO₂, ou un compresseur d'air comprimé (4), ainsi qu'un dispositif de transport afin de transporter un débit volumique à travers la conduite de débit (13, 14, 15) vers le robinet de débit (6), par exemple une pompe d'alimentation (2), **caractérisée par le fait que** le robinet de débit (6) est muni d'un bec verseur de robinet de débit (7) selon l'une quelconque des revendications précédentes.

11. Installation de débit (101) selon la revendication 10, **caractérisée par le fait qu'**un espace collecteur de gaz (23) est prévu à la manière d'un siphon sur le robinet de débit ou sur une zone de la conduite de débit (13, 14, 15), qui est disposée immédiatement en amont du robinet de débit (6), au-dessus du bec verseur de robinet de débit (7).

12. Installation de débit pour des boissons contenant des bulles de gaz, comprenant une conduite de débit (13, 14, 15; 114) qui est menée depuis une source de précurseur de boisson (3) vers un robinet de débit (6),une source de gaz comprimé (4) raccordée à ladite conduite de débit (13, 14, 15; 115), un dispositif de transport (2) afin de transporter un débit volumique à travers la conduite de débit (13, 14, 15) vers le robinet de débit (6), un dispositif de lissage de débit volumique (11) sur le robinet de débit (6) ou à l'extrémité côte robinet de débit de la conduite de débit (13, 14, 15; 115) afin de maintenir le débit volumique au moins presque constant pendant que l'on tire, par exemple une plaque perforée (11) dans le robinet de débit ou dans un bec verseur de robinet de débit (7; 7a), le robinet de débit (6) étant pourvu d'un bec verseur de robinet de débit (7) qui présente une section de tuyau de passage (8) cylindrique et une section de tuyau de sortie (10) qui est contiguë côté sortie à celle-ci et se rétrécit, dans laquelle, entre le côté d'entrée de la section de tuyau de passage (8) et la section de tuyau de sortie (10), un ensemble de mélange (9) est reçu qui est apte à être traversé par le mélange se composant du précurseur de boisson et de bulles de gaz y contenues, tout en réduisant en morceau les bulles de gaz, dans laquelle ladite source de gaz comprimé (4) est raccordée à la conduite de débit (13, 14, 15; 115) en surpression et de manière non réglée, dans un rapport de débit volumique de gaz au débit volumique de liquide, qui est fixé à une valeur constante, le raccordement de la source de gaz comprimé (4) à la conduite de débit (13, 14, 15; 115) s'effectuant en particulier par une soupape à pointeau (22) apte à être préréglée.

13. Installation de débit selon la revendication 12, **caractérisée par le fait que** ledit ensemble de mélange (9; 109) comprend un nombre, en particulier plusieurs, de préférence trois inserts de mousseur (9, 109) disposés fluidiquement en série dans la section de tuyau de passage (8), en particulier des inserts de mousseur (9) pour des mousseurs de robinet, qui sont faits, de préférence, de matière plastique.

14. Installation de débit selon l'une quelconque des revendications précédentes 10 à 13, **caractérisée par le fait que** la source de gaz comprimé (4) est formée par un compresseur d'air comprimé (4), dans laquelle une conduite d'alimentation en gaz (21; 121) menant depuis ledit compresseur d'air comprimé (4) vers la conduite de débit (13, 14, 15; 115) passe, de préférence, par un filtre à air, en particulier un micro-filtre à air.

15. Procédé de production de café ou de bière azoté(e) dans une installation de débit, **caractérisé par le fait que** le café ou la bière est azoté(e) dans une installation de débit (1, 101) selon les revendications 10 à 14.
